# EUROPÄISCHE PATENTSCHRIFT

(11) **EP 4 162 122 B1**
(45) Veröffentlichungstag und Bekanntmachung des Hinweises auf die Patenterteilung: **01.05.2024**
(21) Anmeldenummer: 21716617.2
(22) Anmeldetag: 26.03.2021
(51) Int. Cl.: E04D 3/36, E04D 5/14, F16B 25/00, F16B 25/10

(54) **GEFÄLLEDÄMMUNGSSCHRAUBE MIT RECHTSDREHENDER BOHRSPITZE UND LR-GEWINDE ZUR EINSTELLBAREN BEFESTIGUNG EINER DACHBAHN AUF EINEM STAHLBLECH**
GRADIENT INSULATIN SCREW HAVING A RIGHT-HANDED ROTATIONDRILLING TIP AND LEFT-RIGHT THREADS FOR ADJUSTABLE FASTENINGOF A ROOFING MEMBRANE ON A STEEL SHEET
VIS D'ISOLATION À GRADIENT AYANT UNE POINTE DE FORAGE À ROTATION DROITE ET DES FILETS GAUCHE-DROITE POUR LA FIXATIONAJUSTABLE D'UNE MEMBRANE DE TOITURE SUR UNE TÔLE D'ACIER

(30) Priorität: 05.06.2020 DE 102020207059
(43) Veröffentlichungstag der Anmeldung: 12.04.2023
(73) Patentinhaber: EJOT SE & Co. KG, 57319 Bad Berleburg (DE)
(72) Erfinder: LAMMER-KLUPAZEK, Ewald, 8184 Baierdorf bei Anger (AT); WAGNER, Volker, 35394 Gießen (DE); HELLWIG, Michael, 57334 Bad Laasphe (DE); HEINRICH, Kostja, 57319 Bad Berleburg (DE); SIEGEMUND, Uwe, 57319 Bad Berleburg (DE)
(74) Vertreter: Bardehle Pagenberg Partnerschaft mbB Patentanwälte Rechtsanwälte
(86) Internationale Anmeldenummer: PCT/EP2021/057881
(87) Internationale Veröffentlichungsnummer: WO 2021/244787

(56) Entgegenhaltungen:
- EP-A1- 2 930 378
- WO-A1-89/02504
- CN-U- 203 067 465
- GB-A- 2 169 051

## Beschreibung

Die vorliegende Erfindung betrifft im Allgemeinen eine Gefälledämmungsschraube, ein System aus Gefälledämmungsschraube und Halteelement, sowie ein Verfahren zur einstellbaren Befestigung einer Dachbahn auf einem Untergrund, insbesondere einem Stahlblech.

Bei Flachdächern wird der Dämmstoff gegebenenfalls zusammen mit einer darüber angeordneten Dachbahn mit Hilfe von Schrauben und Halteelementen an dem Untergrund befestigt. Bei dem Untergrund kann es sich unter anderem um ein Stahlblech, beispielsweise in Form eines Stahltrapezbleches handeln. Daher wird die Befestigung im Folgenden überwiegend anhand eines Stahlblechuntergrunds beschrieben. Der Fachmann weiß aber, dass die Befestigung in gleicher Weise auch bei anderen Untergründen erzielt werden kann.

Mit Hilfe von unterschiedlich dicken Dämmstoffen kann auf der Außenseite des Flachdachs ein Gefälle gebildet werden. Das Dachgefälle ist beispielsweise derart ausgestaltet, dass Regenwasser in eine gewünschte Richtung auf dem Dach abflie-ßen kann. Ein typischer Wert eines solchen Dachgefälles beträgt etwa 3%.

Im Stand der Technik sind verschiedene Schrauben und Halteelemente zur Befestigung von Dämmstoffen auf einem Flachdach bekannt. Solche Schrauben und Halteelemente sind zum Beispiel von GB2169051A und EP2930378A1 bekannt. Aufgrund der unterschiedlich dicken Dämmstoffe müssen für die Montage aber Schrauben und Halteelemente mit einer Vielzahl unterschiedlicher Längen verwendet werden. Da es aber nicht für jede mögliche Dämmstoffdicke eine passende Schraube mit Halteelement gibt, werden die Schrauben unterschiedlich tief in den Untergrund geschraubt. Bei einem Untergrund aus Stahlblech hat dies den Nachteil, dass man von der Unterseite des Daches die unterschiedlich weit hervorstehenden Schrauben sehen kann, was gegebenenfalls als optischer Mangel empfunden wird.

Es besteht daher die Aufgabe die Montage von Dämmstoff insbesondere mit Gefälle auf einem Flachdach zu verbessern.

Diese Aufgabe wird mit der Gefälledämmungsschraube, dem System aus Gefälledämmungsschraube und Halteelement, und dem Verfahren zum einstellbaren Befestigen der unabhängigen Ansprüche gelöst. Vorteilhafte Ausführungsformen sind in den abhängigen Ansprüchen erläutert.

Im Rahmen der vorliegenden Erfindung ist eine Gefälledämmungsschraube eine Schraube, wie sie durch die weiteren Anspruchsmerkmale definiert ist. Eine derartige Schraube ist erfindungsgemäß besonders gut geeignet gegebenenfalls mit einem entsprechenden Halteelement ein erstes Element, wie beispielsweise einen Dämmstoff an einem zweiten Element, wie beispielsweise einem Untergrund zu befestigen. Dabei ist das Befestigen erfindungsgemäß besonders flexibel, so dass beispielsweise Dämmstoff mit unterschiedlichen Dicken, wie er zum Beispiel zur Erzielung eines Gefälles verwendet werden kann, mit Hilfe der Schraube befestigt werden kann.

Eine erfindungsgemäße Gefälledämmungsschraube zur einstellbaren Befestigung einer Dachbahn auf einem Untergrund weist auf: eine Bohrspitze mit einer ersten Drehrichtung, anschließend an die Bohrspitze ein Montagegewinde mit einer zweiten Drehrichtung, die sich von der ersten Drehrichtung unterscheidet, anschließend an das Montagegewinde einen ersten gewindefreien Bereich, anschließend an den ersten gewindefreien Bereich ein Justiergewinde mit der ersten Drehrichtung, wobei der Außendurchmesser des Justiergewindes größer ist als die Außendurchmesser des Montagegewindes und der Bohrspitze, und anschließend an das Justiergewinde eine Werkzeugaufnahme.

Die vorliegende Erfindung hat den technischen Vorteil, dass insbesondere Dämmungen zur Erzielung eines Gefälles unter Verwendung von erfindungsgemäßen Schraube mit nur einer Länge oder zumindest einer wesentlich geringeren Anzahl von unterschiedlichen Längen insbesondere auf Stahlblechen befestigt werden können. Denn mit Hilfe des Justiergewindes kann die Länge des Befestigungssystems bestehend aus der Schraube und einem Halteelement auf unterschiedliche Längen eingestellt werden.

Darüber hinaus haben die erfindungsgemäßen Schrauben den Vorteil, dass sie im Endmontagezustand gleich weit auf der Unterseite des Stahlbleches hinausragen. Denn bei bestimmungsgemäßer Verwendung der erfindungsgemäßen Schraube befindet sich im Endmontagezustand - unabhängig von der Dicke des zu befestigenden Dämmstoffs - das Montagegewinde unterhalb des Stahlbleches, der erste gewindefreie Bereich in der Öffnung im Stahlblech und das Justiergewinde oberhalb des Stahlbleches (d.h. der Seite mit dem Dämmstoff).

Außerdem verhindert die erfindungsgemäße Kombination aus den Gewinden und Bohrspitze mit unterschiedlichen Drehrichtungen, dass sich die Schraube beim Einstellen der Länge des Befestigungssystems aus Schraube und Halteelement innerhalb der Öffnung in dem Stahlblech bewegt, d.h. an der Unterseite nicht mehr oder weniger rausschaut. Denn durch das Drehen der Schraube in die zweite Richtung, bewegt sich das Halteelement in Richtung Stahlblech und kann somit verkürzt werden, aber das Justiergewinde kann nicht in die Öffnung in dem Stahlblech laufen und somit die Befestigung der Schraube in dem Stahlblech beeinflussen.

Die erfindungsgemäße Gefälledämmungsschraube besteht aus Bereichen, wie der Bohrspitze, diversen Gewinden und gewindefreien Bereichen, die sich ausgehend von dem vorderen Ende bis zum hinteren Ende erstrecken. Das vordere Ende der Schraube ist das Ende der Schraube, das bei der Montage zuerst in den Untergrund bewegt wird und das hintere Ende der Schraube ist das gegenüberliegende Ende, das am Ende der Montage der Oberfläche der Dachbahn am nächsten ist. Die Reihenfolge der einzelnen Bereiche wird dadurch festgelegt, dass sich ein Bereich an einen anderen Bereich anschließt. Dem Fachmann ist allerdings klar, dass diese Bereiche nicht notwendigerweise unmittelbar aneinander anschließen müssen. Dem Fachmann sind noch zusätzliche Bereiche bekannt, die zwischen den aneinander anschließenden Bereichen angeordnet sein können. Beispiele dafür sind die weiteren Gewinde und gewindefreien Bereiche, die im Folgenden beschrieben sind.

Im Allgemeinen besteht eine Schraube aus einem Kern und einem auf dem Kern angeordneten Gewinde, wobei die radiale Ausdehnung der Schraube mit Hilfe von zwei Durchmessern beschrieben werden kann. Der Kerndurchmesser ist dabei der Durchmesser des Kerns der Schraube und der Außendurchmesser der Durchmesser der Schraube unter Berücksichtigung des auf dem Kern angeordneten Gewindes. Das Gewinde weist eine Steigung auf, wobei die Steigung den Weg bezeichnet, der bei einer Umdrehung zurückgelegt wird. Ein gewindefreier Bereich einer Schraube besteht nur aus dem Kern und weist kein Gewinde auf. Dementsprechend entspricht in diesem Bereich der Kerndurchmesser dem Außendurchmesser. Darüber hinaus können Schrauben Gewinde mit unterschiedlichen Drehrichtungen aufweisen. Dabei werden im Allgemeinen Rechtsgewinde und Linksgewinde unterschieden. Eine Bohrspitze ist eine Spitze einer Schraube, die ausgestaltet ist, um ein Loch in einen Untergrund zu bohren. Daher ähnelt eine Bohrspitze der Ausgestaltung eines Bohrers. Die Bohrspitze weist im Allgemeinen einen Körper mit einer oder mehreren Ausnehmungen und/oder einem oder mehreren Vorsprüngen auf. Der Durchmesser des Körpers kann sich über die Längserstreckung der Bohrspitze von der Spitze der Bohrspitze in Richtung des daran anschließenden Montagegewindes verändern, insbesondere größer werden. Der Durchmesser des Körpers an seiner dicksten Stelle, beispielsweise am Übergang zum Montagegewinde, kann als Kerndurchmesser bezeichnet werden und der größte Durchmesser der Bohrspitze unter Berücksichtigung von etwaigen Vorsprüngen als Außendurchmesser. Im Rahmen der vorliegenden Erfindung kann der Körper der Bohrspitze unterschiedliche Formen aufweisen. Der Körper kann beispielsweise insgesamt kegelförmig ausgestaltet sein oder an die Spitze der Bohrspitze kann sich ein kegelstumpfförmiger oder zylindrischer Körper anschließen. Bei den gegebenenfalls vorhandenen Vorsprüngen kann es sich um Schneidkanten handeln und/oder um ein auf der Bohrspitze angeordnetes Gewinde.

Die erfindungsgemäße Gefälledämmungsschraube weist mindestens zwei Gewinde und eine Bohrspitze auf. Die Bohrspitze und die Gewinde haben alternierende Drehrichtungen, von der Bohrspitze der Gefälledämmungsschraube gesehen. Gemäß einer bevorzugten Ausführungsform kann die Schraube eine rechtsläufige Bohrspitze, ein linksläufiges Montagegewinde und wieder ein rechtsläufiges Justiergewinde aufweisen. Gemäß einer alternativen Ausführungsform werden eine linksläufige Bohrspitze, ein rechtsläufiges Montagegewinde und wieder ein linksläufiges Justiergewinde verwendet. Das Montagewinde und das Justiergewinde können die gleiche Steigung aufweisen, d.h. bei Drehung der Gefälledämmungsschraube kann diese denselben axialen Vortrieb erfahren, unabhängig davon, ob der Vortrieb der Schraube durch das Montagegewinde oder das Justiergewinde erfolgt.

Im Folgenden wird die Erfindung beispielhaft anhand der Ausführungsform mit einer rechtsläufigen Bohrspitze, einem linksläufigen Montagegewinde und wieder einem rechtsläufigen Justiergewinde beschrieben. Dies bedeutet aber nicht, dass die Erfindung auf diese Ausführungsform beschränkt ist.

Nach dem Eindrehen der Bohrspitze in einer ersten Drehrichtung wird durch einen Wechsel in eine zweite Drehrichtung das Montagegewinde in den Untergrund, beispielsweise das Stahlblech geschraubt. Am Ende des Montagegewindes schließt sich der erste gewindefreier Bereich an. Wenn während der Montage durch Drehen der Gefälledämmungsschraube in die zweite Drehrichtung das Montagegewinde durch das Stahlblech bewegt wird, befindet sich das Stahlblech anschließend in diesem ersten gewindefreien Bereich. Da sich in diesem Bereich kein Gewinde befindet, kann die Gefälledämmungsschraube dann weitergedreht werden, ohne dass sie sich weiter in das Stahlblech bewegt.

Das Justiergewinde ist ausgestaltet, um zusammen mit einem Halteelement eines Befestigungssystems die Länge des Befestigungssystems aus Schraube und Halteelement einzustellen. Erfindungsgemäß ist der Außendurchmesser des Justiergewindes größer als der Außendurchmesser der Bohrspitze und der Außendurchmesser des Montagegewindes, damit die erfindungsgemäße Schraube auf einfache Weise mit einem Halteelement verbunden werden kann. So können zuerst die Bohrspitze und dann das Montagegewinde der Schraube beim Verbinden mit dem Halteelement durch einen hohlen Schaft des Halteelements hindurchgeführt werden, bis das Justiergewinde in den hohlen Schaft eingreift.

In einer bevorzugten Ausführungsform der erfindungsgemäßen Gefälledämmungsschraube ist zwischen der Bohrspitze und dem Montagegewinde ein zweiter gewindefreier Bereich angeordnet. Der zweite gewindefreie Bereich hat eine Länge, auf der die Gefälledämmungsschraube durch das Stahlblech geschoben werden muss, bis begonnen wird, das Montagegewinde in das Stahlblech einzudrehen. Dies hat den technischen Vorteil, dass durch eine längere axiale Bewegung der Gefälledämmungsschraube dem Monteur angezeigt wird, dass das Loch im Untergrund gebohrt wurde. Hierdurch erkennt der Monteur besser den Zeitpunkt, an dem die Drehrichtung gewechselt werden muss, da der Bohrprozess tief im Inneren des Dämmstoffes und somit unsichtbar für den Monteur stattfindet.

Das Anordnen eines Bereichs, wie der gerade beschriebene zweite gewindefreie Bereich, zwischen zwei anderen Bereichen der erfindungsgemäßen Gefälledämmungsschraube definiert lediglich die Reihenfolge der einzelnen Bereiche der Gefälledämmungsschraube. Das Anordnen des Bereichs zwischen zwei anderen Bereichen bedeutet nicht notwendigerweise, dass diese Bereiche unmittelbar aneinander anschließen müssen. Im Rahmen der vorliegenden Erfindung können zwischen diesen Bereichen weitere Bereiche angeordnet sein.

In einer weiteren bevorzugten Ausführungsform der erfindungsgemäßen Gefälledämmungsschraube ist zwischen der Bohrspitze und dem Montagegewinde ein Vormontagegewinde mit der ersten Drehrichtung angeordnet. Das Vormontagegewinde kann die gleiche Steigung wie das Justiergewinde aufweisen. Dieses Vormontagegewinde unterstützt das bestimmungsgemäße Anordnen der Gefälledämmungsschraube in dem Untergrund. Sobald das Vormontagegewinde in den Untergrund eingreift hängt die Bewegung der Gefälledämmungsschraube relativ zum Untergrund von der Drehung der Schraube und nicht von dem Monteur ausgeübten Druck ab. Das Vormontagegewinde kann sich unmittelbar an die Bohrspitze anschließen. Im Rahmen der vorliegenden Erfindung können zwischen der Bohrspitze und dem Vormontagegewinde aber auch andere Bereiche angeordnet sein, wie zum Beispiel der oben beschriebene zweite gewindefreie Bereich.

Gemäß einer weiteren bevorzugten Ausführungsform der erfindungsgemäßen Gefälledämmungsschraube ist zwischen dem Vormontagegewinde und dem Montagegewinde ein dritter gewindefreier Bereich angeordnet. Dieser dritte gewindefreie Bereich ermöglicht ein einfaches Wechseln der Drehrichtung vom Vormontagegewinde mit der ersten Drehrichtung zu dem Montagegewinde mit der zweiten Drehrichtung.

In einer weiteren bevorzugten Ausführungsform der erfindungsgemäßen Gefälledämmungsschraube weisen das Vormontagegewinde und das Montagegewinde im Wesentlichen denselben Außendurchmesser und/oder Kerndurchmesser auf. Alternativ kann das Vormontagegewinde gegenüber dem Montagegewinde einen geringeren Außendurchmesser und/oder Kerndurchmesser aufweisen. Beides hat den technischen Vorteil, dass das Montagegewinde die von der Bohrspitze und/oder dem Vormontagegewinde in dem Stahlblech gebildete Öffnung weiter benutzen kann. Hierdurch wird der Kraftaufwand beim Verwenden des Montagegewindes verringert.

In einer weiteren bevorzugten Ausführungsform der erfindungsgemäßen Gefälledämmungsschraube weist die Bohrspitze mindestens ein Schneideelement auf. Dies hat den technischen Vorteil, dass die Gefälledämmungsschraube auf einfache Weise ohne Vorbohrung in die Dachbahn bzw. in das Stahlblech gesetzt werden kann. Das Schneideelement ermöglicht ein positionsgenaues initiales Setzen der Gefälledämmungsschraube.

Im Rahmen der vorliegenden Erfindung weist die Bohrspitze eine erste Drehrichtung auf. Die Bohrspitze ist also ausgestaltet in einen Untergrund zu bohren, wenn sie in die erste Drehrichtung gedreht wird. Grundsätzlich ähnelt eine derartige Bohrspitze der Ausgestaltung eines Bohrers. Die Bohrspitze weist im Allgemeinen einen Körper mit einer Spitze und ein oder mehreren Ausnehmungen und/oder einem oder mehreren Vorsprüngen auf. Wie oben beschrieben kann der Körper der Bohrspitze unterschiedliche Formen aufweisen. An die Spitze der Bohrspitze kann sich beispielsweise ein kegelstumpfförmiger oder zylindrischer Körper anschließen. Der Körper kann aber auch insgesamt kegelförmig ausgestaltet sein.

In einer bevorzugten Ausführungsform der erfindungsgemäßen Gefälledämmungsschraube weist die Bohrspitze an dem vorderen Ende, d.h. dem Ende das bei der Montage zuerst auf den Untergrund auftritt, eine Spitze auf. Diese Spitze weist vorzugsweise mindestens eine Hauptschneide auf, die in einem Winkel zur Drehachse der Gefälledämmungsschraube ausgerichtet ist. Die mindestens eine Hauptschneide bildet in den meisten Anwendungen die erste Öffnung in dem Untergrund. Die mindestens eine Hauptschneide erstreckt sich vorzugsweise von der Drehachse der Gefälledämmungsschraube in einem Winkel radial nach außen.

In einer weiteren bevorzugten Ausführungsform der erfindungsgemäßen Gefälledämmungsschraube weist die Bohrspitze mindestens eine Nebenschneide auf. Die mindestens eine Nebenschneide ist an der Mantelfläche des Körpers der Bohrspitze angeordnet. Die Nebenschneide vergrößert das Bohrloch und entfernt etwaige Bohrreste. Die mindestens eine Nebenschneide ist vorzugsweise derart an der Außenseite der Mantelfläche angeordnet, dass sie gegenüber dem Körper als Vorsprung zumindest teilweise hervorsteht.

Entlang der mindestens einen Hauptschneide und/oder der mindestens einen Nebenscheide erstreckt sich in einer weiteren bevorzugten Ausführungsform eine Spannut. Die Spannut erstreckt sich im Wesentlichen in Richtung der Drehachse der Gefälledämmungsschraube und sie ist ausgestaltet, um beim Abtransport der Bohrspäne behilflich zu sein.

Die Schneiden der Bohrspitze sind ausgestaltet, um ein Bohrloch in den Untergrund zu bohren, wenn die Bohrspitze in die erste Drehrichtung gedreht wird. Insbesondere die mindestens eine Nebenschneide und die mindestens eine Spannut können dann derart ausgestaltet sein, dass wenn die Bohrspitze in die erste Drehrichtung gedreht wird, zuerst die Nebenschneide an dem Untergrund schneidet und danach die Spannut folgt. Weiter bevorzugt sind die mindestens eine Nebenschneide und die Spannut spiralförmig angeordnet, wobei die Spirale vorzugsweise wie ein Gewinde angeordnet ist, mit dem die Bohrspitze in den geschraubt werden kann.

In noch einer weiteren bevorzugten Ausführungsform der erfindungsgemäßen Gefälledämmungsschraube weist der dritte gewindefreie Bereich in Längsrichtung der Gefälledämmungsschraube eine Länge auf, die größer ist als die Dicke des Stahlbleches. Dies vereinfacht das Ändern der Drehrichtung der Gefälledämmungsschraube bei der Montage von der ersten Drehrichtung auf die zweite Drehrichtung.

In einer weiteren bevorzugten Ausführungsform der erfindungsgemäßen Gefälledämmungsschraube weist der erste gewindefreie Bereich einen Durchmesser auf, der kleiner oder gleich dem größeren von Außendurchmesser der Bohrspitze und Kerndurchmesser des Montagegewindes ist. Wenn die Schraube auch ein Vormontagegewinde aufweist, ist der Durchmesser des ersten gewindefreien Bereichs kleiner oder gleich dem größten von Außendurchmesser der Bohrspitze und den Kerndurchmessern des Vormontagegewindes und des Montagegewindes. Der Durchmesser der Bohrung in dem Untergrund ist in den meisten Fällen von dem Außendurchmesser der Bohrspitze und den Kerndurchmesser des Montagegewindes und gegebenenfalls des Vormontagegewindes abhängig. Das Verwenden eines ersten gewindefreien Bereichs, dessen Durchmesser kleiner oder gleich diesem Außendurchmesser und diesen Kerndurchmessern ist stellt sicher, dass die Schraube frei gedreht werden kann, wenn sich der erste gewindefreie Bereich in dem Stahlblech befindet.

In noch einer weiteren bevorzugten Ausführungsform der erfindungsgemäßen Gefälledämmungsschraube weist der erste gewindefreie Bereich in Längsrichtung der Gefälledämmungsschraube eine Länge auf, die größer ist als die Dicke des Stahlbleches. Hierdurch kann sich die erfindungsgemäße Schraube während dem Justieren der Länge des Befestigungssystems relativ frei in der Öffnung in dem Stahlblech bewegen, ohne dass die Integrität der Befestigung beeinträchtigt wird. Dies ist beispielsweise hilfreich, wenn von oben Druck auf das Befestigungssystem ausgeübt wird, zum Beispiel bei einer Begehung des Dachs. Dann kann sich die Schraube zeitweise in der Öffnung in dem Stahlblech nach unten bewegen und wieder nach oben bewegen.

In noch einer weiteren bevorzugten Ausführungsform der erfindungsgemäßen Gefälledämmungsschraube schließt sich an den ersten gewindefreien Bereich eine Verdickung an. Diese Verdickung kann auch als Bund bezeichnet werden. Der Durchmesser des Bundes beziehungsweise der Verdickung ist größer als der Durchmesser des ersten gewindefreien Bereiches. Eine Verdickung bzw. ein Bund anschließend an den ersten gewindefreien Bereich hat den technischen Effekt, dass mit einfachen Mitteln verhindert werden kann, dass das Justiergewinde in das Stahlblech eingreift. Im Prinzip kann die Verdickung auch als rotationssymmetrische Rampe gestaltet sein, über die der Durchmesser der Gefälledämmungsschraube, in Richtung des Justiergewindes, beginnend mit dem Durchmesser des ersten gewindefreien Bereichs auf den Kerndurchmesser des Justiergewindes zunimmt. In diesem Fall dient die Rampe einer kontinuierlichen Dickengestaltung der Gefälledämmungsschraube.

Die obige Aufgabe wird auch durch ein System aus der erfindungsgemäßen Gefälledämmungsschraube und einem Halteelement gelöst. Hierbei weist das Halteelement einen Halteteller und einen hohlen Schaft auf, der sich an den Halteteller anschließt und der derart ausgestaltet ist, dass das Justiergewinde der Gefälledämmungsschraube in den hohlen Schaft eingreifen kann. Hierdurch wird eine einfache, aber auch besonders effektive Befestigung einer Dachbahn auf einem Stahlblech bereitgestellt. Denn mit Hilfe des Justiergewindes kann die Position des Halteelements an der Gefälledämmungsschraube und somit die Länge des Systems variiert werden. Dadurch kann das System für eine Vielzahl von unterschiedlichen Dicken von Dämmstoff verwendet werden.

In einer bevorzugten Ausführungsform des erfindungsgemäßen Systems aus Gefälledämmungsschraube und Halteelement weist der hohle Schaft des Halteelements Vorsprünge auf, die komplementär zu dem Justiergewinde der Gefälledämmungsschraube ausgestaltet sind. Hierbei kann es sich um ein komplementäres Innengewinde handeln. Dem Fachmann ist aber auch bekannt, dass ein Zusammenspiel mit einem Gewinde auch durch einzelne Vorsprünge erzielt werden kann, die nicht als Gewinde ausgestaltet sind.

In einer alternativen Ausführungsform wird das komplementäre Gewinde in dem hohlen Schaft erst beim Einschrauben der Gefälledämmungsschraube in den hohlen Schaft gebildet. Vorzugsweise ist der Innendurchmesser des hohlen Schafts des Halteelements kleiner als der Außendurchmesser des Justiergewindes, jedoch größer als der Kerndurchmesser des Justiergewindes. Dies ermöglicht, dass das Justiergewinde in das Material des hohlen Schafts des Halteelements furcht und/oder einschneidet und sich dadurch beim Einschrauben ein Muttergewinde zum Kraftübertrag zwischen Gefälledämmungsschraube und Halteelement in dem hohlen Schaft bildet. Über den Kraftübertrag können Sogkräfte durch Wind, welche auf die Dachbahn wirken, effizient abgeleitet werden.

In einer weiteren bevorzugten Ausführungsform des erfindungsgemäßen Systems aus Gefälledämmungsschraube und Halteelement ist der Innendurchmesser des hohlen Schafts des Halteelements größer als die Außendurchmesser der Bohrspitze, des Vormontagegewindes (wenn vorhanden) und des Montagegewindes der Gefälledämmungsschraube. Dies ermöglicht ein einfaches Verbinden des Halteelements mit dem Justiergewinde der Gefälledämmungsschraube. So kann die Gefälledämmungsschraube beim Verbinden mit dem Halteelement mit der Spitze voran in den hohlen Schaft des Halteelements geführt werden, bis das Justiergewinde in den hohlen Schaft eingreift.

In noch einer weiteren bevorzugten Ausführungsform des erfindungsgemäßen Systems aus Gefälledämmungsschraube und Halteelement ist die Gefälledämmungsschraube aus einem Material gefertigt, welches härter ist als das Material des Halteelements.

In noch einer weiteren bevorzugten Ausführungsform des erfindungsgemäßen Systems aus Gefälledämmungsschraube und Halteelement ist die Gefälledämmungsschraube aus Metall gefertigt und ist das Halteelement aus Kunststoff gefertigt.

Die obige Aufgabe wird auch durch ein Verfahren zur einstellbaren Befestigung einer Dachbahn auf einem Stahlblech mittels des erfindungsgemäßen Systems aus Gefälledämmungsschraube und Halteelement gelöst, wobei das Verfahren die folgenden Schritte aufweist: Einstoßen der Bohrspitze der Gefälledämmungsschraube des Systems in die Dachbahn in Richtung des darunter befindlichen Stahlbleches, Einschrauben der Bohrspitze der Gefälledämmungsschraube in ersten Drehrichtung in das Stahlblech, Einschrauben des Montagegewindes der Gefälledämmungsschraube in einer zweiten Drehrichtung, die sich von der ersten Richtung unterscheidet, in das Stahlblech bis sich der erste gewindefreie Bereich der Gefälledämmungsschraube in dem Stahlblech befindet, und Weiterdrehen der Gefälledämmungsschraube in der zweiten Drehrichtung, bis der Halteteller des Halteelements des Systems auf der Dachbahn aufliegt.. Das erfindungsgemäße Verfahren ermöglicht eine einfache und zuverlässige Befestigung der Dachbahn auf dem Stahlblech.

Insbesondere kann am Ende des erfindungsgemäßen Montageverfahrens der Halteteller derart auf der Dachbahn aufliegen, dass es zu einem oberflächenbündigen Abschluss mit der Dachbahn kommt. D.h. es ist möglich, dass die Oberfläche des Haltetellers in einer Ebene mit der Dachbahn liegt, so dass auf der montierten Dachbahn durch die montierten Halteteller keine Unebenheiten entstehen.

Falls das Einstoßen der Bohrspitze der Gefälledämmungsschraube des Systems aus Gefälledämmungsschraube und Halteelement in die Dachbahn in Richtung des darunter befindlichen Stahlblech zu einem Aufliegen des Haltetellers auf der Dachbahn, jedoch nicht zu einem Kontakt der Bohrspitze mit dem Stahlblech führt, kann das erfindungsgemäße Verfahren weiter aufweisen: Einschrauben des Justiergewindes der Gefälledämmungsschraube in der ersten Drehrichtung in das Haltelement bis die Bohrspitze in Kontakt mit dem Stahlblech kommt.

Falls die Gefälledämmungsschraube ein Vormontagegewinde aufweist, kann das erfindungsgemäße Verfahren weiter aufweisen: Einschrauben des Vormontagegewindes der Gefälledämmungsschraube in der ersten Drehrichtung in das Stahlblech bis sich der zweite gewindefreie Bereich der Gefälledämmungsschraube in dem Stahlblech befindet. Hierdurch wird erreicht, dass das Justiergewinde eine Mindeststrecke tief in das Haltelement eingeschraubt wird. Die Mindeststrecke beträgt die Länge des Vormontagegewindes. Dadurch wird das Risiko eines Ablösens des Haltetellers von der Schraube bei der Montage minimiert. Zusätzlich wird Druck, den der Monteur von oben auf das System aus Gefälledämmungsschraube und Halteteller ausübt, durch das Vormontagegewinde auf das Stahlblech abgeleitet. Es kommt somit nicht zu einem Aufprallen des Montagegewindes auf das Bohrloch in dem Stahlblech. Dadurch wird vermieden, dass weder das Bohrloch noch das Montagegewinde durch Aufprall beschädigt werden, was in einer weniger zuverlässigen Montage der Dachbahn resultieren würde.

Wie bereits oben erläutert wird die Erfindung anhand einer beispielhaften Ausführungsform mit einer rechtsläufigen Bohrspitze, einem Linksgewinde und wieder einem Rechtsgewinde beschrieben. Dies bedeutet aber nicht, dass die Erfindung auf diese Ausführungsform beschränkt ist. Die alternative Ausführungsform mit einer linksläufigen Bohrspitze, einem Rechtsgewinde und wieder einem Linksgewinde kann genauso verwendet werden.

In einer bevorzugten Ausführungsform wird auf einem Stahlblech zunächst ein Dämmstoff und dann eine Dachbahn aufgebracht. Die Dachbahn kann an regelmäßigen, möglicherweise gitterförmig angeordneten Positionen, Markierungen enthalten, an denen erfindungsgemäße Systeme aus Gefälledämmungsschraube und Halteelement eingebracht werden sollen. Es ist möglich, aber nicht notwendig, dass sich an den regelmäßigen Positionen bereits Vorbohrungen in der Dachbahn befinden.

Vorzugsweise werden vor dem Einstoßen der Bohrspitze des Systems die beiden Teile des Systems, die Gefälledämmungsschraube und das Halteelement miteinander verbunden. Dieses Verbinden kann beispielsweise an der Baustelle oder unmittelbar nach der Herstellung der beiden Teile stattfinden. Auf der Baustelle wird dann eine Gefälledämmungsschraube mit Halteelement in die Dachbahn, beispielsweise in eine der regelmäßigen Positionen gestoßen. Das Einstoßen kann durch ein Rechtsdrehen der Gefälledämmungsschraube unterstützt werden. Grundsätzlich kann die Gefälledämmungsschraube aber auch ohne Drehung direkt in die Dachbahn eingestoßen werden. Die Bohrspitze der Gefälledämmungsschraube wird durch den Dämmstoff bis auf das Stahlblech hinabgeführt. Durch Druck von oben auf die Werkzeugaufnahme bzw. Drehen der Werkzeugaufnahme wird die Bohrspitze der Gefälledämmungsschraube auch durch das Stahlblech gestoßen. Durch Rechtsdrehen wird nun gegebenenfalls das Vormontagegewinde in das Stahlblech eingeschraubt. Das Halteelement wird dabei derart von dem Dämmstoff gehalten, dass es nicht mit dreht.

Sobald das Stahlblech über die Bohrspitze und ggfs. das Vormontagegewinde der Schraube gewandert ist, bewegt sich die Schraube nicht weiter in den Untergrund. Stattdessen kann sich der Halteteller aufgrund von fortgesetzter Rechtsdrehung relativ zu dem Halteelement für den Monteur spürbar von der Dachbahn abheben. Dies gibt dem Monteur einen Hinweis, dass nun die Drehrichtung geändert werden muss, im vorliegenden Beispiel in den Linkslauf. Im Rahmen des erfindungsgemäßen Verfahrens wird dann durch Linksdrehen das Montagegewinde eingeschraubt bis sich das Stahlblech in dem ersten gewindefreien Bereich der Schraube befindet. Darüber hinaus bewirkt die Linksdrehung, dass sich das Halteelement mit dem Halteteller wieder in Richtung Untergrund bewegt.

Bei dem erfindungsgemäßen System ist das Justiergewinde der Gefälledämmungsschraube während der Montage zumindest teilweise in dem hohlen Schaft des Halteelementes angeordnet. Das Justiergewinde greift in den hohlen Schaft, beispielsweise in ein dort befindliches Innengewinde, welches beispielsweise durch das Einschrauben des Justiergewindes in den hohlen Schaft gebildet wird. Wie aber bereits oben erläutert wurde, kann das Justiergewinde auch anders in den hohlen Schaft eingreifen.

Solange das Halteelement die Dachbahn und/oder die Dämmung nicht berührt, dreht sich das Halteelement mit der Schraube. Wenn das Halteelement aber die Dachbahn und/oder die Dämmung kontaktiert, dreht sich die Schraube relativ zu dem Halteelement. In Abhängigkeit von der Drehbewegung der Schraube bewegt sich das Halteelement dann in Richtung Stahlblech oder von dem Stahlblech weg.

In einer bevorzugten Ausführungsform ist das Halteelement derart ausgestaltet, dass es in der Dachbahn und/oder dem Dämmstoff kraftschlüssig und/oder formschlüssig gehalten wird. So kann das Halteelement beispielsweise an der den Dämmstoff kontaktierenden Oberfläche Vorsprünge aufweisen, die ein Mitdrehen des Halteelements beim Drehen der Schraube verhindern.

Im Rahmen der vorliegenden Erfindung wird die Schraube weiter in Linksrichtung gedreht, wenn sich das Stahlblech in dem ersten gewindefreien Bereich befindet. Aufgrund des ersten gewindefreien Bereichs dringt die Gefälledämmungsschraube dann nicht weiter in das Stahlblech ein. Zudem wird durch die fortgesetzte Linksdrehung verhindert, dass das Montagegewinde wieder in das Stahlblech einfädelt und somit die Schraube wieder aus dem Stahlblech herausgedreht wird. Die Schraube dreht sich aber, beispielsweise aufgrund des oben beschriebenen Berührens des Halteelements mit der Dachbahn und/oder mit der Dämmung, relativ zu dem Halteelement. Durch das Zusammenspiel des hohlen Schafts des Halteelements und des Rechtsgewindes des Justiergewindes bewegt sich das Halteelement in Richtung Stahlblech.

Die Erfindung wird nun anhand der beigefügten Zeichnungen näher erläutert. Hieraus ergeben sich weitere Einzelheiten und Merkmale des Gegenstandes der Erfindung. Es zeigen:
- Fig. 1a bis 1c: Beispiele für eine erfindungsgemäße Gefälledämmungsschraube mit und ohne Vormontagegewinde und gewindefreiem Bereich;
- Fig. 2a und b: eine schematische Seitenansicht bzw. eine schematische Draufsicht auf eine Bohrspitze einer erfindungsgemäßen Gefälledämmungsschraube;
- Fig. 3: einen vertikalen Schnitt durch ein Halteelement, das zusammen mit den in Fig. 1 gezeigten Gefälledämmungsschrauben in einem erfindungsgemäßen System verwendet werden kann;
- Fig. 4: ein Beispiel für ein erfindungsgemäßes System aus dem Haltelement aus Fig. 3 und der Gefälledämmungsschraube aus Fig. 1b;
- Fig. 5a bis 5d: eine schematische Darstellung der einzelnen Schritte bei der Montage des erfindungsgemäßen Systems aus Fig. 4, also unter Verwendung der Gefälledämmungsschraube aus Fig. 1b;
- Fig. 5e bis 5h: eine schematische Darstellung der einzelnen Schritte bei der Montage eines erfindungsgemäßen Systems aus dem Halteelement aus Fig. 3 und der Gefälledämmungsschraube aus Fig. 1c;
- Fig. 6a und 6b: eine schematische Darstellung der beim Eindrehen der Gefälledämmungsschraube auftretenden Kräfte für das System aus Fig. 4; und
- Fig. 7: eine schematische Darstellung mehrerer Systeme gemäß Fig. 4 aus Gefälledämmungsschraube und Halteelement im eingedrehten Zustand für eine geneigte Dachbahn.

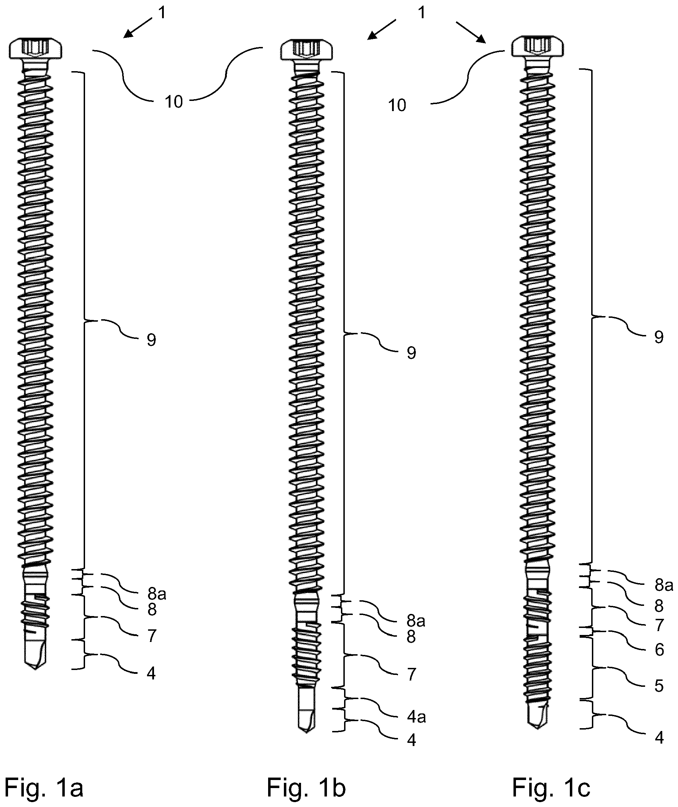

Figur 1a zeigt eine schematische Darstellung einer Ausführungsform einer erfindungsgemäßen Gefälledämmungsschraube 1. Die Gefälledämmungsschraube 1 weist eine Bohrspitze 4 auf, die sich an einem Ende der Gefälledämmungsschraube 1 befindet. In dem in Figur 1a gezeigten Ausführungsbeispiel ist die Bohrspitze 4 ausgestaltet, um durch eine Rechtsdrehung ein Loch in den Untergrund zu bohren.

An die Bohrspitze 4 schließt sich ein Montagegewinde 7 an, das in dem hier gezeigten Ausführungsbeispiel ein Linksgewinde ist. Im vorliegenden Beispiel hat das Montagegewinde 7 im Wesentlichen den gleichen Kerndurchmesser wie die Bohrspitze 4.

An das Montagegewinde 7 schließt sich bei der in Figur 1a gezeigten Ausführungsform der erfindungsgemäßen Gefälledämmungsschraube 1 ein erster gewindefreier Bereich 8 an. Grundsätzlich kann auch der Durchmesser dieses ersten gewindefreien Bereichs 8 im Wesentlichen dem Kerndurchmesser des Montagegewindes 7 und dem Außendurchmesser der Bohrspitze 4 entsprechen. In der hier gezeigten Ausführungsform schließt sich an den ersten gewindefreien Bereich 8 an dem der Bohrspitze abgewandten Ende eine Verdickung 8a an, d.h. ein Bereich mit einem größeren Durchmesser als der Durchmesser des ersten gewindefreien Bereichs 8. Diese Verdickung 8a kann auch als Bund bezeichnet werden. An den ersten gewindefreien Bereich 8 bzw. an die Verdickung 8a schließt sich ein Justiergewinde 9 an.

Die Verdickung 8a kann bei der Montage der erfindungsgemäßen Gefälledämmungsschraube hilfreich sein, weil dadurch verhindert wird, dass das Justiergewinde 9 in das Stahlblech 3 eingreift.

Erfindungsgemäß hat das Justiergewinde 9 einen Außendurchmesser, der größer ist als die Außendurchmesser der Bohrspitze 4 und des Montagegewindes 7. An das Justiergewinde 9 schließt sich eine Werkzeugaufnahme 10 an mit der eine Drehbewegung auf die Schraube übertragen werden kann.

In dem in Figur 1a gezeigten Ausführungsbeispiel weist die Gefälledämmungsschraube 1 an dem der Bohrspitze 4 gegenüberliegenden Ende einen Kopf auf, in dem die Werkzeugaufnahme 10 angeordnet ist. Der Außendurchmesser des Kopfes ist größer als der Kerndurchmesser des Justiergewindes 9.

Die in Figur 1a gezeigte Ausführungsform der erfindungsgemäßen Gefälledämmungsschraube 1 wurde ausgehend von der Bohrspitze 4 bis zu der Werkzeugaufnahme 10 anhand der aneinander anschließenden Gewinde und Bereiche der Schraube beschrieben. Dem Fachmann ist allerdings klar, dass diese Bereiche nicht notwendigerweise unmittelbar aneinander anschließen müssen. Dem Fachmann sind noch zusätzliche Bereiche bekannt, die zwischen den gewindefreien Bereichen und/oder den Gewinden angeordnet werden können, ohne die Funktion der erfindungsgemäßen Schraube im Wesentlichen zu beeinflussen. Dies ist bei den anderen gezeigten und beschriebenen Ausführungsformen in gleicher Weise der Fall.

Figur 1b zeigt eine schematische Darstellung einer weiteren Ausführungsform einer erfindungsgemäßen Gefälledämmungsschraube 1. In diesem Ausführungsbeispiel der Gefälledämmungsschraube 1 befindet sich zwischen der Bohrspitze 4 und dem Montagegewinde 7 ein zweiter gewindefreier Bereich 4a. In dem vorliegenden Ausführungsbeispiel entspricht der Durchmesser dieses zweiten gewindefreien Bereichs 4a im Wesentlichen dem Kerndurchmesser der Bohrspitze 4. Die Längserstreckung des zweiten gewindefreien Bereichs 4a, d.h. die Erstreckung parallel zur Längsachse der Gefälledämmungsschraube 1, entspricht mindestens der Dicke eines Stahlblechs. Die Längserstreckung des zweiten gewindefreien Bereichs 4a kann aber auch deutlich größer sein und beispielsweise einem Vielfachen der Dicke eines Stahlblechs entsprechen.

In dem in Figur 1c gezeigten Ausführungsbeispiel der Gefälledämmungsschraube 1 schließt sich an die Bohrspitze 4 ein Vormontagegewinde 5 an. Obwohl dies in Figur 1c nicht gezeigt ist, kann sich zwischen der Bohrspitze 4 und dem Vormontagegewinde 5 ein zweiter gewindefreier Bereich 4a befinden, wie es in Figur 1b gezeigt ist. Zusätzlich kann, muss aber nicht, zwischen dem Vormontagegewinde 5 und dem Montagegewinde 7, ein dritter gewindefreier Bereich 6 angeordnet sein. Das Vormontagegewinde 5 hat wie die Bohrspitze 4 die erste Drehrichtung. In dem hier gezeigten Ausführungsbeispiel ist dies ein Rechtsgewinde. In dem vorliegenden Ausführungsbeispiel sind der Kerndurchmesser und der Außendurchmesser des Vormontagegewindes 5 jeweils über die Längserstreckung des Vormontagegewindes 5 gleich. Im Rahmen der Erfindung ist es aber beispielsweise auch möglich, dass sich der Kerndurchmesser und/oder der Außendurchmesser über die Länge des Vormontagegewindes 5 vergrößert. Beispielsweise können der Kerndurchmesser und/oder der Außendurchmesser des Vormontagegewindes 5 von dem Ende, das näher an der Bohrspitze 4 liegt, bis zum anderen Ende des Vormontagegewindes 5 größer werden.

In dem vorliegenden Ausführungsbeispiel sind der Kerndurchmesser und/oder der Außendurchmesser des Vormontagegewindes 5 und der der Kerndurchmesser und/oder der Außendurchmesser des Montagegewindes 7 gleich groß. Im Rahmen der vorliegenden Erfindung kann der Kerndurchmesser und/oder der Außendurchmesser des Vormontagegewindes 5 aber auch kleiner sein als der Kerndurchmesser und/oder der Außendurchmesser des Montagegewindes 7.

In dem in Figur 1c gezeigten Ausführungsbeispiel der erfindungsgemäßen Gefälledämmungsschraube 1 ist zwischen dem Vormontagegewinde 5 und dem Montagegewinde 7 ein dritter gewindefreier Bereich 6 angeordnet. Dieser dritte gewindefreie Bereich 6 ermöglicht ein einfaches Wechseln der Drehrichtung vom Vormontagegewinde 5 mit der ersten Drehrichtung zu dem Montagegewinde 7 mit der zweiten Drehrichtung.

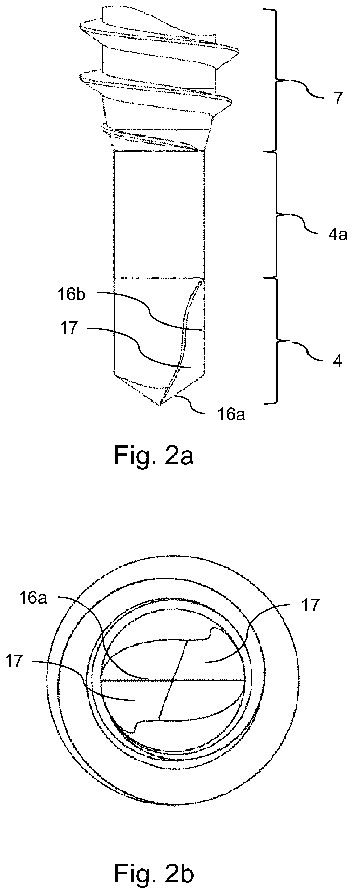

Figur 2a zeigt eine schematische Seitenansicht auf eine Bohrspitze 4 einer erfindungsgemäßen Gefälledämmungsschraube 1. Im Rahmen der vorliegenden Erfindung weist die Bohrspitze 4 eine erste Drehrichtung auf. Die Bohrspitze 4 ist also ausgestaltet in einen Untergrund zu bohren, wenn sie in die erste Drehrichtung gedreht wird. Hierfür weist die hier gezeigte Bohrspitze 4 mindestens ein Schneideelement auf.

Ein Schneidelement der Bohrspitze ist in der in Figur 2a gezeigten Ausführungsform die Hauptschneide 16a, die sich von der Spitze der Bohrspitze 4 in einem Winkel zur Drehachse der Gefälledämmungsschraube 1 radial nach außen erstreckt. Man könnte auch sagen, dass die Hauptschneide 16a an der Mantelfläche des Körpers der Bohrspitze 4 angeordnet ist. Die Bohrspitze 4 kann eine oder mehrere Hauptschneiden 16a aufweisen, die in den meisten Anwendungen die erste Öffnung in dem Untergrund bilden. Ein weiteres Schneidelement kann die in Figur 2a gezeigte Nebenschneide 16b sein. Die Nebenschneide 16b ist in der in Figur 2a gezeigten Ausführungsform an der Mantelfläche des Körpers der Bohrspitze 4 angeordnet. Die Nebenschneide 16b vergrößert das Bohrloch und entfernt etwaige Bohrreste. Die Bohrspitze 4 kann eine oder mehrere Nebenschneiden 16b aufweisen, die vorzugsweise derart an der Außenseite der Mantelfläche angeordnet sind, dass sie gegenüber dem zylindrischen Körper als Vorsprung zumindest teilweise hervorstehen. Figur 2a zeigt auch den zweiten gewindefreien Bereich 4a und das Montagegewinde 7, wobei in dieser Ausführungsform der Kerndurchmesser und der Außendurchmesser des Montagegewindes 7 größer sind als der Kerndurchmesser und der Außendurchmesser der Bohrspitze 4.

Wie sich aus der Zusammenschau der Figuren 2a und 2b ergibt, kann die Bohrspitze 4 eine Spannut 17 aufweisen, die sich in der vorliegenden Ausführungsform entlang der mindestens einen Hauptschneide 16a und/oder der mindestens einen Nebenschneide 16b erstreckt. Die Spannut 17 erstreckt sich im Wesentlichen in Richtung der Drehachse der Gefälledämmungsschraube und sie ist ausgestaltet, um beim Abtransport der Bohrspäne behilflich zu sein.

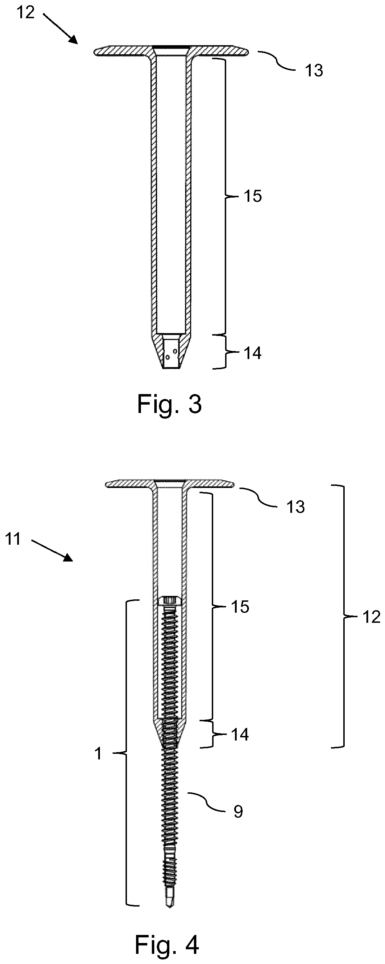

Figur 3 zeigt eine Ausführungsform eines Halteelements 12, wie es zusammen mit den in Figur 1a bis 1c beschriebenen Gefälledämmungsschrauben 1 in einem erfindungsgemäßen System verwendet werden kann.

Das Halteelement 12 weist mindestens zwei Teile auf, einem Halteteller 13 und einem hohlen Schaft 14. Der Halteteller 13 ist ausgebildet, um auf der Dachbahn aufzuliegen, und so die Dachbahn und die darunter angeordnete Dämmung nach unten zu halten. Der hohle Schaft 14 ist derart ausgestaltet, dass das Justiergewinde 9 in dem hohlen Schaft 14 eingreifen kann. In der in Figur 3 gezeigten Ausführungsform weist das Halteelement 12 außerdem ein Verbindungselement 15 auf, das den Halteteller 13 und den hohlen Schaft 14 miteinander verbindet. Während der hohle Schaft 14 einen Innendurchmesser aufweist, der derart ausgestaltet ist, dass das Justiergewinde 9 darin eingreifen kann, kann das Verbindungselement 15 - wie in Figur 3 gezeigt - einen größeren Innendurchmesser aufweisen. In der hier gezeigten Ausführungsform ist das Ende des Halteelements 12, das dem Halteteller 13 gegenüberliegt, spitz zulaufend ausgestaltet, um das Einführen des Befestigungssystems aus Gefälledämmungsschraube 1 und Halteelement 12 in die Dachbahn 2 und in den Dämmstoff zu vereinfachen.

Figur 4 zeigt ein Beispiel für ein erfindungsgemäßes System 11 aus der in Figur 1b gezeigten Gefälledämmungsschraube 1 und dem in Figur 3 gezeigten Halteelement 12. In der hier gezeigten Ausführungsform des Systems 11 aus Gefälledämmungsschraube 1 und Halteelement 12 ist der Innendurchmesser des Verbindungselements 15 größer als der Außendurchmesser des Kopfes der Schraube 1, so dass der Kopf in dem Verbindungselement 15 längs bewegt werden kann, während der Innendurchmesser des hohlen Schafts 14 kleiner ist als der Außendurchmesser des Kopfes. Dies ermöglicht ein Eindrehen der Gefälledämmungsschraube 1 in das Halteelement 12 hinein bis dass der Kopf der Schraube an einem Anschlag am Übergang vom Innendurchmesser des Verbindungselements 15 zu dem Innendurchmesser des hohlen Schafts 14 aufliegt. Dadurch wird verhindert, dass die Schraube 1 nach unten, das heißt vom Monteur weg, aus dem Halteelement 12 herausgedreht werden kann.

In der gezeigten Ausführungsform ist der Innendurchmesser des hohlen Schaftes 14 kleiner als der Außendurchmesser des Justiergewindes 9 der Gefälledämmungsschraube 1, aber größer als der Kerndurchmesser des Justiergewindes 9 der Gefälledämmungsschraube 1.

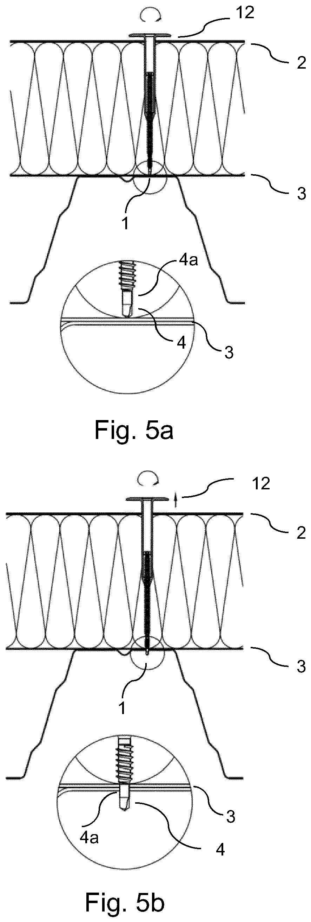

Figuren 5a bis 5d zeigen eine schematische Darstellung der einzelnen Schritte bei der Montage des erfindungsgemäßen Systems 11 aus Figur 4, also der Gefälledämmungsschraube aus Figur 1b und dem Haltelement aus Figur 3, zur Befestigung einer Dachbahn 2 auf einem Stahlblech 3. Figur 5a zeigt das Aufliegen der Bohrspitze 4 der Gefälledämmungsschraube 1 auf dem Stahlblech 3 nach dem Einstoßen und Eindrehen des Systems 11 in die Dachbahn 2 in Richtung des darunter befindlichen Stahlblechs 3. Das Justiergewinde 9 befindet sich hier bereits in dem hohlen Schaft 14 des Haltelements 12, d.h. das Eindrehen eines Gegengewindes in den hohlen Schaft 14 für das Justiergewinde 9 hat gegebenenfalls schon vorher stattgefunden. Wie oben bereits erläutert, ist es auch möglich, dass das Gegengewinde bei der Herstellung des Haltelements 12 gebildet wird. Unabhängig davon kann das Eindrehen des Justiergewindes 9 in den hohlen Schaft 14 vor der Montage des Systems stattfinden oder während dem Einstoßen und Eindrehen des Systems 11 in die Dachbahn 2.

In Figur 5a befindet sich der Halteteller 13 nach dem anfänglichen Einstoßen in der Nähe der Dachbahn 2, aber nicht notwendigerweise auf der Dachbahn 2. Die Gefälledämmungsschraube 1 wird nun weiter in der ersten Drehrichtung, im Beispiel der Figur 5a der Rechtsrichtung, gedreht. Dies führt aber nicht notwendigerweise zu einer entsprechenden Drehung des Halteelements 12, da das Halteelement 12 durch den Dämmstoff der Dachbahn 2 gehalten wird. Hierfür kann die durch die Reibung verursachte Haltekraft ausreichend sein. Alternativ kann das Halteelement 12 Vorsprünge aufweisen, die ein Mitdrehen des Halteelements 12 verhindern. Bei fortgesetzter Rechtsdrehung, unter leichtem Druck von oben, dringt die Bohrspitze 4 der Gefälledämmungsschraube 1 durch das Stahlblech 3, bis sich das Stahlblech 3 in dem zweiten gewindefreien Bereich 4a der Gefälledämmungsschraube 1 befindet. Gleichzeitig dreht sich das Justiergewinde 9 in den hohlen Schaft 14 des Haltelements 12.

Wenn die Bohrspitze 4 und gegebenenfalls der zweite gewindefreie Bereich 4a das Stahlblech 3 durchdringen, bewirkt dies eine axiale Bewegung der Gefälledämmungsschraube 1 in Richtung Untergrund. Das Drehen des Justiergewindes 9 der Gefälledämmungsschraube 1 in dem hohlen Schaft 14 des Halteelements 12 in der ersten Drehrichtung bewirkt, dass sich das Halteelement 12 axial und relativ zur Gefälledämmschraube 1 nach oben wegbewegt, d.h. weg vom Untergrund. Wenn sich durch das Eindrehen das Halteelement 12 relativ zur Gefälledämmungsschraube 1 schneller nach oben weg bewegt, als sich die Gefälledämmungsschraube 1 durch das Absenken der Bohrspitze 4 und des zweiten gewindefreien Bereichs 4a durch das Stahlblech 3 in Richtung Untergrund bewegt, erhöht sich der Abstand zwischen dem Halteteller 13 des Haltelements 12 und der Dachbahn 2. Bewegt sich Bohrspitze 4 und gegebenenfalls der zweite gewindefreie Bereich 4a schneller durch das Stahlblech 3 als sich das Haltelement 12 von der Gefälledämmungsschraube 1 weg bewegt, reduziert sich der Abstand zwischen dem Halteteller 13 des Haltelements 12 und der Dachbahn 2. Wenn beide Bewegungen nahezu gleich schnell stattfinden, verändert sich der Abstand des Haltetellers 13 von der Dachbahn 2 nicht.

Bei der in Figur 5a gezeigten Ausführungsform, gibt es einen substantiellen Unterschied zwischen der Bewegung der Bohrspitze 4 durch das Stahlblech 3 und der Relativbewegung zwischen der Gefälledämmungsschraube 1 und dem Halteelement 12. Die Relativbewegung zwischen der Gefälledämmungsschraube 1 und dem Halteelement 12 ist eine im Wesentlichen kontinuierliche Bewegung, die von der Drehgeschwindigkeit der Gefälledämmungsschraube 1 und der Steigung des Justiergewindes 9 abhängt. Bei der in Figur 5a gezeigten Ausführungsform ist die Geschwindigkeit, mit der sich die Bohrspitze 4 durch das Stahlblech 3 bewegt, diskontinuierlich. Zuerst bewegt sich die Bohrspitze 4 ganz langsam in Richtung Untergrund, während die Bohrspitze 4 langsam das Stahlblech 3 anbohrt. Sobald ein ausreichend großes Loch im Stahlblech 3 existiert, bewegt sich die Bohrspitze 4 und gegebenenfalls ein daran anschließender gewindefreier Bereich schnell durch das Stahlblech 3, bis die Bewegung beispielsweise von einem Gewinde aufgehalten wird. Diese Bewegung muss im Rahmen der vorliegenden Erfindung aber nicht notwendigerweise der Fall sein. Wie bereits oben erläutert, kann die Bohrspitze auch ein Gewinde aufweisen. Dieses Gewinde kann derart gestaltet sein, dass sich die Bohrspitze zumindest zweitweise kontinuierlich durch das Stahlblech bewegt. Wenn die Gefälledämmungsschraube 1 beispielsweise ein Vormontagegewinde 5 aufweist, wie dies in Figur 1c gezeigt ist, bewegt sich die Gefälledämmungsschraube 1 nach dem schnellen Durchstoßen der Bohrspitze 4 durch das Stahlblech 3 kontinuierlich in Richtung Untergrund. Die Geschwindigkeit dieser Bewegung hängt dann auch wieder von der Drehgeschwindigkeit der Gefälledämmungsschraube 1 und der Steigung des Vormontagegewindes 5 ab.

Figur 5b zeigt nun die Situation, nachdem die Bohrspitze 4 das Stahlblech 3 durchdrungen hat. An den zweiten gewindefreien Bereich 4a schließt sich das Montagegewinde 7 mit der zweiten Drehrichtung an. In dem hier gezeigten Ausführungsbeispiel ist dies ein Linksgewinde. Dieses Montagegewinde 7 mit der zweiten Drehrichtung, verhindert, dass sich die Gefälledämmungsschraube 1 weiter in Richtung Untergrund bewegt, wenn sie weiter in die erste Drehrichtung gedreht wird. Da - wie oben beschrieben - das Halteelement 12 von der Dachbahn 2 gehalten wird, bewirkt das weitere Drehen der Gefälledämmungsschraube 1, dass sich das Justiergewinde 9 in dem Gegengewinde in dem hohlen Schaft 14 des Halteelements 12 bewegt. Dies führt bei einem Drehen der Gefälledämmungsschraube 1 in die erste Drehrichtung dazu, dass sich der hohle Schaft 14 des Halteelements 12 auf dem Justiergewinde 9 in Richtung Werkzeugaufnahme 10 bewegt. Das bewirkt außerdem, dass sich der Halteteller 13 des Halteelements 12 wieder von der Dachbahn 2 wegbewegt. Wenn der Monteur dies sieht, weiß er, dass die Bohrspitze 4 das Stahlblech 3 durchdrungen hat und er deshalb nun die Drehrichtung von der ersten in die zweite Drehrichtung ändern kann, also im hier gezeigten Beispiel von Rechtsauf Linkslauf.

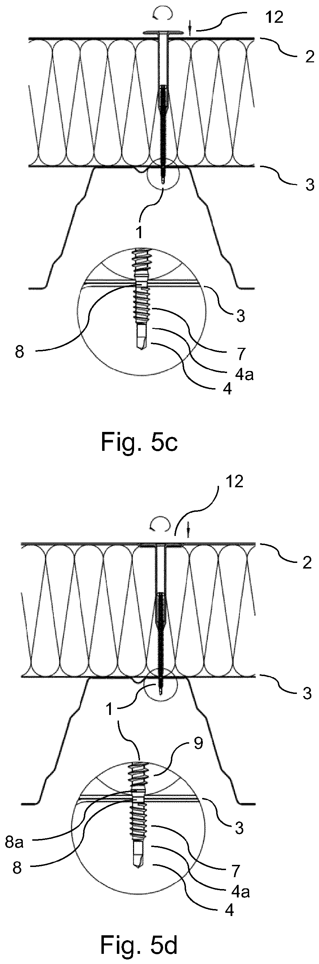

Durch die Drehung der Gefälledämmungsschraube 1 in der zweiten Drehrichtung, hier in Linksrichtung und gegebenenfalls leichten Druck von oben auf die Gefälledämmungsschraube 1 greift nun das Montagegewinde 7 der Gefälledämmungsschraube 1 in das Stahlblech 3 ein und das Montagegewinde 7 wird in das Stahlblech 3 geschraubt, bis sich das Stahlblech 3 in dem ersten gewindefreien Bereich 8 befindet, wie in Figur 5c gezeigt.

Dabei senkt sich der Halteteller 13 des Halteelements 12 wieder in Richtung Dachbahn 2, da erstens die Gefälledämmungsschraube 1 weiter nach unten durch das Stahlblech 3 tritt und zweitens sich durch die Linksdrehung das Halteelement 12 in Richtung der Bohrspitze 4 der Gefälledämmungsschraube 1 bewegt. Dies ist in Figur 5c durch den Pfeil neben dem Halteteller des Haltelements 12 angedeutet.

Eine mögliche Verdickung 8a, die sich an dem zu dem Justiergewinde 9 gewandten Ende des gewindefreien Bereichs 8 anschließt, kann verhindern, dass trotz Druckes von oben auf die Gefälledämmungsschraube 1, z.B. durch einen Akkuschrauber, das Stahlblech 3 nicht aus dem ersten gewindefreien Bereich 8 in Richtung des Justiergewindes 9 herausgedrückt wird.

Bei fortgesetzter Drehung der Gefälledämmungsschraube 1 in der zweiten Drehrichtung, wie in Figur 5d gezeigt, bleibt das Stahlblech 3 in dem ersten gewindefreien Bereich 8 und der Halteteller des Halteelements 12 wird weiter auf die Dachbahn 2 gezogen. Dieses weitere Heranziehen des Haltetellers 13 des Haltelements 12 gegen die Dachbahn 2 ist in Figur 5d durch den senkrechten Pfeil dargestellt. Dabei wird ein Wiedereintritt des Montagegewindes 7 der Gefälledämmungsschraube 1 in das Stahlblech 3 vermieden, da dazu eine entgegengesetzte Drehrichtung der Gefälledämmungsschraube 1, nämlich eine Drehung in der ersten Drehrichtung (hier: Rechtsdrehung), nötig wäre. Die fortgesetzte Drehung der Gefälledämmungsschraube 1 in der zweiten Drehrichtung wird gestoppt, wenn der Halteteller 13 des Halteelements 12 mit der gewünschten Kraft an die Dachbahn 2 herangezogen ist.

Bei Einsatz eines zusätzlichen Vormontagegewindes an der Gefälledämmungsschraube werden die Schritte der Figuren 5a bis 5d leicht abgewandelt. Dies wird im Folgenden beschrieben.

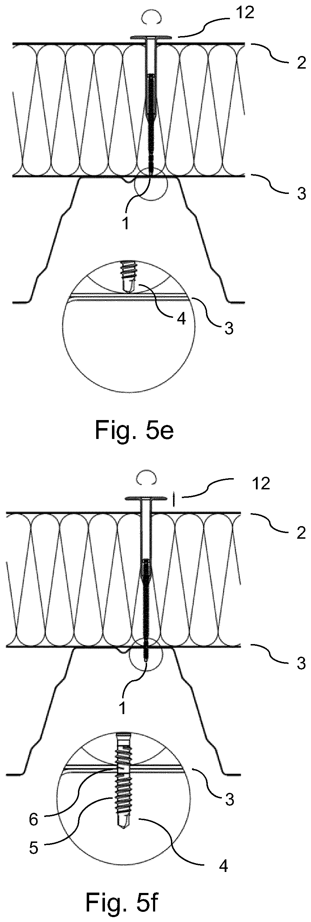

Figuren 5e bis 5h zeigen eine schematische Darstellung der einzelnen Schritte bei der Montage eines erfindungsgemäßen Systems 11 aus Gefälledämmungsschraube 1 aus Figur 1c und eines Haltelements aus Figur 3 zur Befestigung einer Dachbahn 2 auf einem Stahlblech 3. Figur 5e zeigt das Aufliegen der Bohrspitze 4 der Gefälledämmungsschraube 1 auf dem Stahlblech 3 nach Einstoßen und Eindrehen des Systems 11 in die Dachbahn 2 in Richtung des darunter befindlichen Stahlblechs 3. Die Gefälledämmungsschraube 1 wird nun weiter in Rechtsrichtung gedreht. Der Halteteller 13 befindet sich noch in einem gewissen Abstand zu der Dachbahn 2. Bei fortgesetzter Rechtsdrehung dringt die Bohrspitze 4 der Gefälledämmungsschraube 1 durch das Stahlblech 3, und das Vormontagegewinde 5 der Gefälledämmungsschraube 1 wird durch das Stahlblech 3 hindurchgedreht, bis sich das Stahlblech 3 im dritten gewindefreien Bereich 6 der Gefälledämmungsschraube 1 befindet. Diese Situation ist in Figur 5f dargestellt. Dabei hat sich der Abstand zwischen Halteelement 12 und Dachbahn 2 zunächst noch nicht verändert, da sich durch die Rechtsdrehung nicht nur das Vormontagegewinde 5 der Gefälledämmungsschraube 1 in das Stahlblech 3 bewegt, sondern auch das Justiergewinde 9 relativ zum hohlen Schaft 14 des Halteelements 12 dreht und sich damit der hohle Schaft 14 des Halteelements 12 auf dem Justiergewinde 9 in Richtung Werkzeugaufnahme 10 bewegt. Bei fortgesetzter Rechtsdrehung dreht die Gefälledämmungsschraube 1 im Stahlblech 3 nun frei im gewindefreien Bereich 6 und tritt nicht weiter in das Stahlblech 3 ein. Dabei hebt sich der Halteteller 13 weiter von der Dachbahn 2 ab, wie durch den Pfeil in Figur 5f dargestellt, da sich durch die fortgesetzte Rechtsdrehung das Justiergewinde 9 der Gefälledämmungsschraube 1 weiter relativ zum hohlen Schaft 14 dreht. Durch das Anheben des Halteelements 12 wird dem Monteur angezeigt, dass die Drehrichtung von Rechts- auf Linkslauf gewechselt werden sollte.

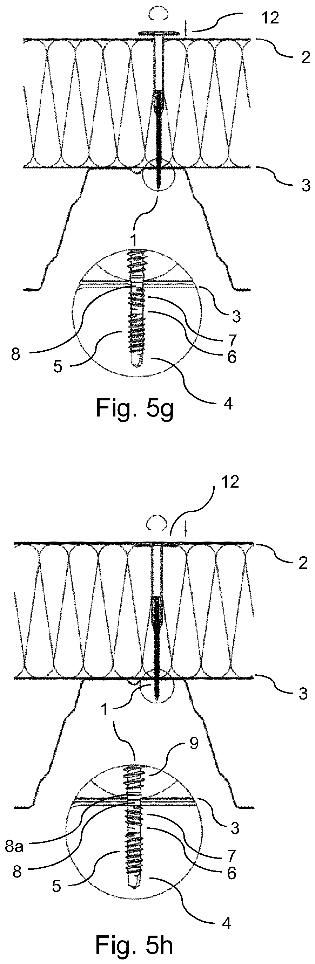

Durch anschließende Linksdrehung der Gefälledämmungsschraube 1 und gegebenenfalls leichten Druck von oben auf die Gefälledämmungsschraube 1 greift nun das Montagegewinde 7 der Gefälledämmungsschraube 1 in das Stahlblech 3 ein und wird eingeschraubt, bis sich das Stahlblech 3 im ersten gewindefreien Bereich 8 befindet, wie in Figur 5g gezeigt. Dabei senkt sich der Halteteller 13 des Halteelements 12 wieder in Richtung Dachbahn 2, da erstens die Gefälledämmungsschraube 1 weiter nach unten durch das Stahlblech 3 tritt und zweitens sich durch die Linksdrehung das Halteelement 12 in Richtung der Bohrspitze 4 der Gefälledämmungsschraube 1 bewegt. Dies ist in Figur 5g durch den Pfeil neben dem Halteteller angedeutet.

Wie oben beschrieben kann eine mögliche an den ersten gewindefreien Bereichs 8 anschließende Verdickung 8a verhindern, dass trotz Druckes von oben auf die Gefälledämmungsschraube 1 das Stahlblech 3 nicht aus dem ersten gewindefreien Bereich 8 in Richtung des Justiergewindes 9 herausgedrückt wird.

Bei fortgesetzter Linksdrehung der Gefälledämmungsschraube 1, wie in Figur 5h gezeigt, bleibt das Stahlblech 3 in dem ersten gewindefreien Bereich 8 und der Halteteller 13 des Halteelements 12 wird weiter auf die Dachbahn 2 gezogen. Dieses weitere Heranziehen des Haltetellers 13 gegen die Dachbahn 2 ist in Figur 5h durch den senkrechten Pfeil dargestellt. Wie oben wird dabei ein Wiedereintritt des Montagegewindes 7 der Gefälledämmungsschraube 1 in das Stahlblech 3 vermieden, da dazu eine entgegengesetzte Drehrichtung der Gefälledämmungsschraube 1, nämlich eine Rechtsdrehung, nötig wäre. Auch hier wird die fortgesetzte Linksdrehung der Gefälledämmungsschraube 1 gestoppt, wenn der Halteteller 13 des Halteelements 12 mit der gewünschten Kraft an die Dachbahn 2 herangezogen ist.

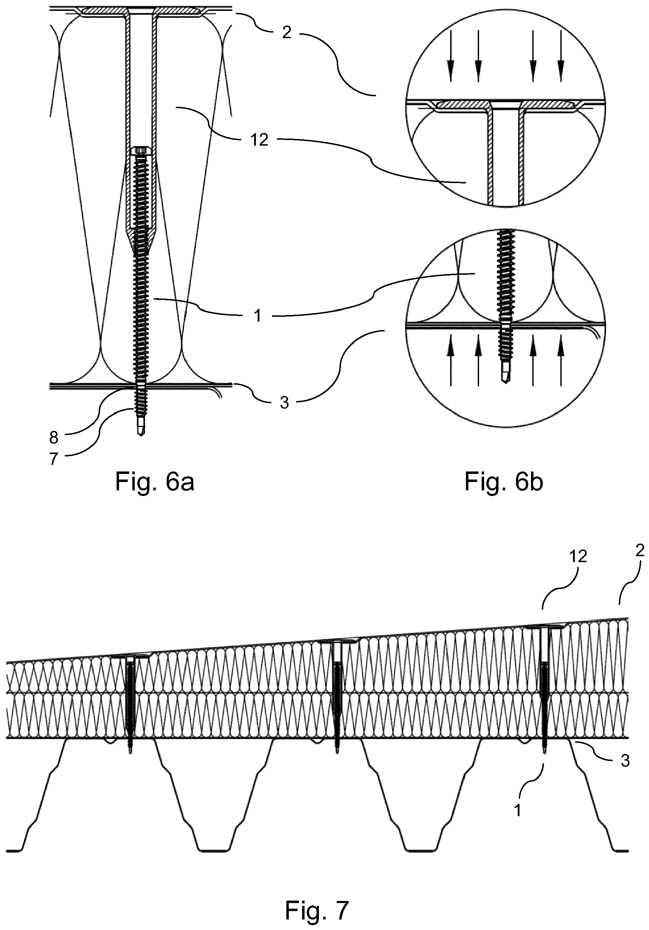

Figuren 6a und 6b zeigen beispielhaft eine schematische Darstellung der beim Eindrehen der Gefälledämmungsschraube 1 auftretenden Kräfte. Wenn sich der erste gewindefreie Bereich 8 der Gefälledämmungsschraube 1 in dem Stahlblech 3 befindet, wird durch fortgesetztes Linksdrehen der Halteteller 13 des Halteelements 12 in Richtung Dachbahn 2 gezogen. Dadurch wirken zwei Kräfte auf den Dämmstoff, an dem Stahlblech 3 und an dem Halteteller 13. Diese Kräfte sind in Figur 6b mit Hilfe von Pfeilen veranschaulicht.

In Figur 7 sind drei Systeme 11 aus Gefälledämmungsschraube 1 und Halteelement 12 an drei Stellen verschiedener Dachdicke für eine geneigte Dachbahn 2 nach der Montage dargestellt. Hierbei ist erkennbar, dass das Zusammenspiel aus Justiergewinde der Gefälledämmungsschraube 1 und dem hohlen Schaft 14 des Halteelements 12, verschiedene vertikale Gesamtlängen des Systems 11 aus Gefälledämmungsschraube 1 und Halteelement 12 ermöglicht, ohne dass die Gefälledämmungsschrauben 1 verschieden weit unterhalb des Stahlbleches 3 herausragen.

## Patentansprüche

1. Eine Gefälledämmungsschraube (1) zur einstellbaren Befestigung einer Dachbahn (2) auf einem Untergrund, insbesondere einem Stahlblech (3), die Gefälledämmungsschraube (1) aufweisend:
eine Bohrspitze (4) mit einer ersten Drehrichtung;
anschließend an die Bohrspitze (4) ein Montagegewinde (7) mit einer zweiten Drehrichtung,
anschließend an das Montagegewinde (7) ein erster gewindefreier Bereich (8);
anschließend an den ersten gewindefreien Bereich (8) ein Justiergewinde (9) mit der ersten Drehrichtung, dessen Außendurchmesser größer ist als die Außendurchmesser des Montagegewindes (7) und der Bohrspitze (4); und
anschließend an das Justiergewinde (9) eine Werkzeugaufnahme (10), **dadurch gekennzeichnet dass**, die zweite Drehrichtung sich von der ersten Drehrichtung unterscheidet.

2. Die Gefälledämmungsschraube (1) gemäß Anspruch 1, wobei zwischen der Bohrspitze (4) und dem Montagegewinde (7) ein zweiter gewindefreier Bereich (4a) angeordnet ist.

3. Die Gefälledämmungsschraube (1) gemäß Anspruch 1 oder 2, wobei zwischen der Bohrspitze (4) und dem Montagegewinde (7) ein Vormontagegewinde (5) mit der ersten Drehrichtung angeordnet ist.

4. Die Gefälledämmungsschraube (1) gemäß Anspruch 3, wobei zwischen dem Vormontagegewinde (5) und dem Montagegewinde (7) ein dritter gewindefreier Bereich (6) angeordnet ist.

5. Die Gefälledämmungsschraube (1) gemäß einem der Ansprüche 3 oder 4, wobei das Vormontagegewinde (5) und das Montagegewinde (7) im Wesentlichen denselben Außendurchmesser aufweisen.

6. Die Gefälledämmungsschraube (1) gemäß einem der Ansprüche 3 bis 5, wobei das Vormontagegewinde (5) und das Montagegewinde (7) im Wesentlichen denselben Kerndurchmesser aufweisen.

7. Die Gefälledämmungsschraube (1) gemäß einem der Ansprüche 4 bis 6, wobei der dritte gewindefreie Bereich (6) in Längsrichtung der Gefälledämmungsschraube (1) eine Länge aufweist, die größer ist als die Dicke des Untergrunds.

8. Die Gefälledämmungsschraube (1) gemäß einem der vorhergehenden Ansprüche, wobei der erste gewindefreie Bereich (8) in Längsrichtung der Gefälledämmungsschraube (1) eine Länge aufweist, die größer ist als die Dicke des Untergrunds.

9. Die Gefälledämmungsschraube (1) gemäß einem der vorhergehenden Ansprüche, wobei sich an den ersten gewindefreien Bereich (8) eine Verdickung (8a) anschließt, wobei die Verdickung (8a) einen Durchmesser aufweist, der größer ist als der Durchmesser des ersten gewindefreien Bereichs (8).

10. Ein System (11) zur einstellbaren Befestigung einer Dachbahn (2) auf einem Untergrund, insbesondere einem Stahlblech (3), bestehend aus einer Gefälledämmungsschraube (1) nach einem der Ansprüche 1 bis 9 und einem Halteelement (12), das Halteelement (12) aufweisend:
einen Halteteller (13); und
einen hohlen Schaft (14), der sich an den Halteteller (13) anschließt und der derart ausgestaltet ist, dass das Justiergewinde (9) der Gefälledämmungsschraube (1) in den hohlen Schaft (14) eingreifen kann.

11. Das System (11) gemäß Anspruch 10, wobei der Innendurchmesser des hohlen Schafts (14) des Halteelements (12) kleiner ist als der Außendurchmesser des Justiergewindes (9), jedoch größer ist als der Kerndurchmesser des Justiergewindes (9) der Gefälledämmungsschraube (1).

12. Das System (11) gemäß einem der Ansprüche 10 oder 11, wobei der Innendurchmesser des hohlen Schafts (14) des Halteelements (12) größer ist als der Außendurchmesser des Montagegewindes (7) der Gefälledämmungsschraube (1).

13. Das System (11) gemäß einem der Ansprüche 10 bis 12, wobei die Gefälledämmungsschraube (1) aus einem Material gefertigt ist, welches härter ist als das Material des Halteelements (12).

14. Das System (11) gemäß Anspruch 13, wobei die Gefälledämmungsschraube (1) aus Metall und das Halteelement (12) aus Kunststoff gefertigt sind.

15. Ein Verfahren zur einstellbaren Befestigung einer Dachbahn (2) auf einem Untergrund, insbesondere einem Stahlblech (3) unter Verwendung eines Systems (11) nach einem der Ansprüche 10 bis 14, das Verfahren aufweisend:
Einstoßen der Bohrspitze (4) der Gefälledämmungsschraube (1) des Systems (11) in die Dachbahn (2) in Richtung des darunter befindlichen Untergrunds;
Eindrehen der Bohrspitze (4) der Gefälledämmungsschraube (1) in einer ersten Drehrichtung in den Untergrund;
Einschrauben des Montagegewindes (7) der Gefälledämmungsschraube (1) in einer zweiten Drehrichtung, die sich von der ersten Drehrichtung unterscheidet, in den Untergrund bis sich der erste gewindefreie Bereich (8) der Gefälledämmungsschraube (1) in dem Untergrund befindet; und
Drehen der Gefälledämmungsschraube (1) weiterhin in der zweiten Drehrichtung, bis der Halteteller (13) des Halteelements (12) des Systems (11) auf der Dachbahn (2) aufliegt.

## Claims

1. A gradient insulation screw (1) for adjustable fastening of a roofing membrane (2) on a substrate, in particular a steel sheet (3), the gradient insulation screw (1) comprising:
a drilling tip (4) with a first direction of rotation;
following the drilling tip (4), an assembly thread (7) with a second direction of rotation;
following the assembly thread (7), a first thread-free region (8);
following the first thread-free region (8), an adjustment thread (9) with the first direction of rotation, the outer diameter of which is greater than the outer diameters of the assembly thread (7) and the drilling tip (4); and
following the adjustment thread (9), a tool holder (10) **characterized in that** the second direction of rotation differs from the first direction of rotation.

2. The gradient insulation screw (1) according to claim 1, wherein a second thread-free region (4a) is arranged between the drilling tip (4) and the assembly thread (7).

3. The gradient insulation screw (1) according to claim 1 or 2, wherein a preassembly thread (5) with the first direction of rotation is arranged between the drilling tip (4) and the assembly thread (7).

4. The gradient insulation screw (1) according to claim 3, wherein a third thread-free region (6) is arranged between the preassembly thread (5) and the assembly thread (7).

5. The gradient insulation screw (1) according to any one of claims 3 or 4,
wherein the preassembly thread (5) and the assembly thread (7) have substantially the same outer diameter.

6. The gradient insulation screw (1) according to any one of claims 3 to 5, wherein the preassembly thread (5) and the assembly thread (7) have substantially the same core diameter.

7. The gradient insulation screw (1) according to any one of claims 4 to 6, wherein the third thread-free region (6) comprises a length in the longitudinal direction of the gradient insulation screw (1) which is greater than the thickness of the substrate.

8. The gradient insulation screw (1) according to any one of the preceding claims, wherein the first thread-free region (8) comprises a length in the longitudinal direction of the gradient insulation screw (1) which is greater than the thickness of the substrate.

9. The gradient insulation screw (1) according to any one of the preceding claims, wherein the first thread-free region (8) is followed by a thickening (8a), wherein the thickening (8a) has a diameter which is greater than the diameter of the first thread-free region (8).

10. A system (11) for adjustable fastening of a roofing membrane (2) on a substrate, in particular a steel sheet (3), consisting of a gradient insulation screw (1) according to any one of claims 1 to 9 and a holding element (12), the holding element (12) comprising:
a holding plate (13); and
a hollow shaft (14), which follows the holding plate (13) and which is adapted such that the adjustment thread (9) of the gradient insulation screw (1) can engage in the hollow shaft (14).

11. The system (11) according to claim 10, wherein the inner diameter of the hollow shaft (14) of the holding element (12) is smaller than the outer diameter of the adjustment thread (9), but greater than the core diameter of the adjustment thread (9) of the gradient insulation screw (1).

12. The system (11) according to any one of claims 10 or 11, wherein the inner diameter of the hollow shaft (14) of the holding element (12) is greater than the outer diameter of the assembly thread (7) of the gradient insulation screw (1).

13. The system (11) according to any one of claims 10 to 12, wherein the gradient insulation screw (1) is made of a material which is harder than the material of the holding element (12).

14. The system (11) according to claim 13, wherein the gradient insulation screw (1) is made of metal and the holding element (12) is made of plastic.

15. A method for adjustable fastening of a roofing membrane (2) on a substrate, in particular a steel sheet (3) using a system (11) according to any one of claims 10 to 14, the method comprising:
pushing the drilling tip (4) of the gradient insulation screw (1) of the system (11) into the roofing membrane (2) in the direction of the substrate located underneath;
screwing the drilling tip (4) of the gradient insulation screw (1) into the substrate in a first direction of rotation;
screwing the assembly thread (7) of the gradient insulation screw (1) into the substrate in a second direction of rotation, which differs from the first direction of rotation, until the first thread-free region (8) of the gradient insulation screw (1) is located in the substrate; and
rotating the gradient insulation screw (1) furthermore in the second direction of rotation until the holding plate (13) of the holding element (12) of the system (11) rests on the roofing membrane (2).

## Revendications

1. Vis inclinée pour isolation (1), pour fixer de manière réglable une bande de couverture (2) sur un substrat, en particulier une tôle en acier (3), la vis inclinée pour isolation (1) présentant :
une pointe de forage (4) avec un premier sens de rotation ;
dans le prolongement de la pointe de forage (4), un filetage de montage (7) avec un deuxième sens de rotation,
dans le prolongement du filetage de montage (7), une première zone sans filetage (8) ;
dans le prolongement de la première zone sans filetage (8), un filetage d'ajustement (9) avec le premier sens de rotation, dont le diamètre extérieur est supérieur au diamètre extérieur du filetage de montage (7) et de la pointe de forage (4) ; et
dans le prolongement du filetage d'ajustement (9), un porte-outil (10), **caractérisée en ce que** le deuxième sens de rotation est différent du premier sens de rotation.

2. Vis inclinée pour isolation (1) selon la revendication 1, dans laquelle une deuxième zone sans filetage (4a) est disposée entre la pointe de forage (4) et le filetage de montage (7).

3. Vis inclinée pour isolation (1) selon la revendication 1 ou 2, dans laquelle un filetage de prémontage (5) avec le premier sens de rotation est disposé entre la pointe de forage (4) et le filetage de montage (7).

4. Vis inclinée pour isolation (1) selon la revendication 3, dans laquelle une troisième zone sans filetage (6) est disposée entre le filetage de prémontage (5) et le filetage de montage (7).

5. Vis inclinée pour isolation (1) selon l'une des revendications 3 ou 4, dans laquelle le filetage de prémontage (5) et le filetage de montage (7) présentent sensiblement le même diamètre extérieur.

6. Vis inclinée pour isolation (1) selon l'une des revendications 3 à 5, dans laquelle le filetage de prémontage (5) et le filetage de montage (7) présentent sensiblement le même diamètre de coeur.

7. Vis inclinée pour isolation (1) selon l'une des revendications 4 à 6, **caractérisée en ce que** la troisième zone sans filetage (6) présente dans le sens longitudinal de la vis inclinée pour isolation (1) une longueur, qui est supérieure à l'épaisseur du substrat.

8. Vis inclinée pour isolation (1) selon l'une des revendications précédentes, dans laquelle la première zone sans filetage (8) présente dans le sens longitudinal de la vis inclinée pour isolation (1) une longueur, qui est supérieure à l'épaisseur du substrat.

9. Vis inclinée pour isolation (1) selon l'une des revendications précédentes, dans laquelle une zone épaissie (8a) se situe dans le prolongement de la première zone sans filetage (8), dans laquelle la zone épaissie (8a) présente un diamètre qui est supérieur au diamètre de la première zone sans filetage (8).

10. Système (11) pour fixer de manière réglable une bande de couverture (2) sur un substrat, en particulier une tôle en acier (3), constitué d'une vis inclinée pour isolation (1) selon l'une des revendications 1 à 9 et d'un élément de maintien (12), l'élément de maintien (12) présentant :
un disque de maintien (13) ; et
une tige creuse (14), qui se situe dans le prolongement du disque de maintien (13) et qui est configurée de telle manière que le filetage d'ajustement (9) de la vis inclinée pour isolation (1) puisse venir en prise avec la tige creuse (14).

11. Système (11) selon la revendication 10, dans lequel le diamètre intérieur de la tige creuse (14) de l'élément de maintien (12) est inférieur au diamètre extérieur du filetage d'ajustement (9), toutefois est supérieur au diamètre de coeur du filetage d'ajustement (9) de la vis inclinée pour isolation (1).

12. Système (11) selon l'une des revendications 10 ou 11, dans lequel le diamètre intérieur de la tige creuse (14) de l'élément de maintien (12) est supérieur au diamètre extérieur du filetage de montage (7) de la vis inclinée pour isolation (1).

13. Système (11) selon l'une des revendications 10 à 12, dans lequel la vis inclinée pour isolation (1) est produite à partir d'un matériau, qui st plus dur que le matériau de l'élément de maintien (12).

14. Système (11) selon la revendication 13, dans lequel la vis inclinée pour isolation (1) est produite à partir de métal et l'élément de maintien (12) est produit à partir de matière plastique.

15. Procédé pour fixer de manière réglable une bande de toiture (2) sur un substrat, en particulier une tôle en acier (3) en utilisant un système (11) selon l'une des revendications 10 à 14, le procédé comprenant :
l'insertion par poussée de la pointe de forage (4) de la vis inclinée pour isolation (1) du système (11) dans la bande de couverture (2) en direction du substrat se trouvant en dessous ;
l'introduction de la pointe de forage (4) de la vis inclinée pour isolation (1) dans le substrat par rotation dans un premier sens de rotation ;
le vissage du filetage de montage (7) de la vis inclinée pour isolation (1) dans le substrat dans un deuxième sens de rotation, qui est différente du premier sens de rotation jusqu'à ce que la première zone sans filetage (8) de la vis inclinée pour isolation (1) se trouve dans le substrat ; et
la poursuite de la rotation de la vis inclinée pour isolation (1) dans le deuxième sens de rotation jusqu'à ce que le disque de maintien (13) de l'élément de maintien (12) du système (11) repose sur la bande de couverture (2).
